# EUROPEAN PATENT SPECIFICATION

(11) **EP 2 933 498 B1**
(45) Date of publication and mention of the grant of the patent: **25.10.2017**
(21) Application number: 15162202.4
(22) Date of filing: 01.04.2015
(51) Int. Cl.: F04D 29/053, F04D 29/056

(54) **TURBOMACHINE AND REFRIGERATION CYCLE APPARATUS**
TURBOMASCHINE UND KÄLTEKREISLAUFVORRICHTUNG
TURBOMACHINE ET APPAREIL A CYCLE DE REFRIGERATION

(30) Priority: 18.04.2014 JP 2014086170
(43) Date of publication of application: 21.10.2015
(73) Proprietor: Panasonic Intellectual Property Management Co., Ltd., Osaka-shi, Osaka 540-6207 (JP)
(72) Inventor: NISHIBU, Mamoru, Osaka, 540-6207 (JP); TAGUCHI, Hidetoshi, Osaka, 540-6207 (JP); HIWATA, Akira, Osaka, 540-6207 (JP); SHOYAMA, Tadayoshi, Osaka, 540-6207 (JP); KOUDA, Kazuyuki, Osaka, 540-6207 (JP)
(74) Representative: Eisenführ Speiser

(56) References cited:
- WO-A1-2012/176037
- US-A1- 2006 216 176
- US-A1- 2011 174 009

## Description

### BACKGROUND

### 1. Technical Field

The present disclosure relates to a turbomachine and particularly relates to a turbomachine for a refrigeration cycle apparatus that uses a refrigerant whose saturated vapor pressure is a negative pressure at ordinary temperature specified as 20°C ± 15°C in JIS Z8703 of Japanese Industrial Standards (JIS), which is pressure lower than atmospheric pressure when measured as absolute pressure.

### 2. Description of the Related Art

Conventionally, refrigeration cycle apparatuses that use chlorofluorocarbon (CFC) refrigerants or alternative CFC refrigerants have been widely used. However, such refrigerants cause problems including destruction of the ozone layer and global warming. Thus, refrigeration cycle apparatuses that use water as refrigerants capable of greatly reducing loads to the global environment are proposed.

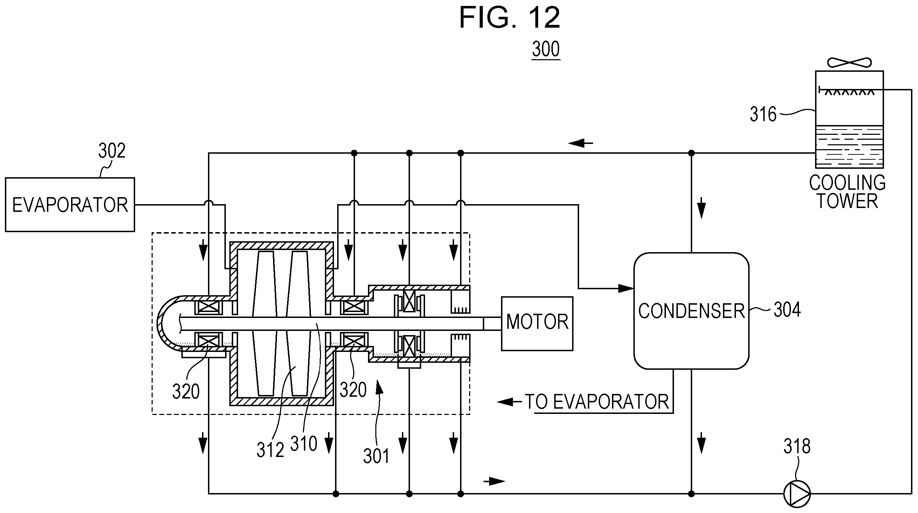

For example, as illustrated in FIG. 12, International Publication No. 2010/010925 describes a refrigerator 300 that includes a compressor 301, an evaporator 302, a condenser 304, a cooling tower 316, and a cooling water pump 318. In the refrigerator 300, water is used as a refrigerant. The compressor 301 includes a rotation shaft 310, an impeller 312, and a bearing 320. In the compressor 301, water is supplied to the bearing 320 as a lubricant. Specifically, the discharge pressure of the cooling water pump 318 is utilized to carry part of the cooling water supplied to the condenser 304 to the bearing 320. The refrigerator described in International Publication No. 2010/010925 is susceptible of increasing reliability of the compressor.

### SUMMARY

The embodiment provides a highly reliable turbomachine for a refrigeration cycle apparatus that uses a refrigerant whose saturated vapor pressure is a negative pressure at ordinary temperature.

In one general aspect, the techniques disclosed here feature a turbomachine as defined in claim 1.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

FIG. 1 is a cross-sectional diagram of a turbomachine according to a first embodiment;
FIG. 2 is a cross-sectional diagram of a rotation shaft along line II-II in FIG. 1;
FIG. 3 is a cross-sectional diagram of a rotation shaft according to a variation;
FIG. 4 is a cross-sectional diagram of a rotation shaft according to another variation;
FIG. 5 is a cross-sectional diagram of a rotation shaft and a bearing according to still another variation;
FIG. 6 is a cross-sectional diagram of a rotation shaft along line VI-VI in FIG. 5;
FIG. 7 is a cross-sectional diagram of a rotation shaft and a bearing according to still another variation;
FIG. 8 is a cross-sectional diagram of a rotation shaft and a bearing according to still another variation;
FIG. 9 is a configuration diagram illustrating an example of a refrigeration cycle apparatus that includes the turbomachine in FIG. 1;
FIG. 10 is a configuration diagram illustrating another example of a refrigeration cycle apparatus that includes the turbomachine in FIG. 1;
FIG. 11 is a cross-sectional diagram illustrating a condensation mechanism according to a variation; and
FIG. 12 is a configuration diagram illustrating a conventional refrigerator.

### DETAILED DESCRIPTION

### [Underlying Knowledge Forming Basis of the Present Disclosure]

The present inventors have conducted study of a turbomachine referred to as the "turbomachine in the study stage" hereinafter, which is a turbomachine for a refrigeration cycle apparatus that uses a refrigerant whose saturated vapor pressure is a negative pressure at ordinary temperature specified as 20°C ± 15°C in JIS Z8703, which is pressure lower than atmospheric pressure when measured as absolute pressure. The turbomachine in the study stage includes a rotation shaft and a bearing that supports the rotation shaft, and includes a lubricant supply passage that supplies a refrigerant as a lubricant that travels smoothly between the rotation shaft and the bearing. As a result, the knowledge described below has been obtained.

In the turbomachine in the study stage, what is supplied to the bearing as the lubricant is not a "lubricating oil" but "waster", which is the refrigerant. Thus, the turbomachine in the study stage has been favorable in the points described below. That is, when a "lubricating oil" is supplied to the bearing as the lubricant, the lubricating oil and the water are mixed and cause a suspension, and the performance of the lubrication considerably decreases. As another possibility, when the suspension flows out into the refrigeration cycle apparatus, the lubricating oil acts as thermal resistance and reduces the performance of the refrigeration cycle apparatus. In contrast, in the turbomachine in the study stage, "waster", which is the refrigerant, is supplied to the bearing as the lubricant. Accordingly, the above-mentioned problems caused by the suspension of the lubricating oil and the water may be prevented and the considerable decrease in the performance of the lubrication may be suppressed. In addition, the lubricant of the bearing may be disposed of more easily and the configurations of the turbomachine and the refrigeration cycle apparatus may be simplified.

However, the present inventors have found that the reliability of the turbomachine in the study stage is insufficient. The reasons are given as follows. In the refrigeration cycle apparatus that uses a refrigerant whose saturated vapor pressure is a negative pressure at ordinary temperature, the pressure inside the compressor is close to the saturated vapor pressure of the refrigerant. Thus, when the refrigerant of the refrigeration cycle apparatus is supplied to the bearing of the compressor as the lubricant, the refrigerant is already in a state in which the refrigerant easily evaporates. In particular, as regards slide bearings used in turbomachines, the peripheral speed of the rotation shaft of the turbomachine is high and the calorific amount is large. As the peripheral speed of the rotation shaft of the turbomachine increases, the pressure of the lubricant in a portion in which the gap between the supported surface of the rotation shaft and the slide surface of the bearing widens becomes a negative pressure more easily. Accordingly, as the number of rotations of the rotation shaft increases, cavitation is more likely to occur in the refrigerant supplied as the lubricant. As a result, the amount of the lubricant of the bearing is insufficient and the reliability of the compressor is decreased.

Thus, the present inventors have considered applying sufficiently high static pressure to the refrigerant supplied to the bearing as the lubricant so as to suppress the evaporation of the refrigerant and the occurrence of the cavitation in the bearing. For example, utilization of the discharge pressure of the cooling water pump has been considered so as to supply water to the lubricant supply passage as the lubricant. It has been found however that arranging a cooling water pump with high performance is necessary so as to apply sufficiently high static pressure to the refrigerant supplied to the bearing as the lubricant and that the cost of the turbomachine increases accordingly.

Then, after careful review, the present inventors have focused on the point that when a refrigerant whose saturated vapor pressure is a negative pressure at ordinary temperature, such as water, is used as an operating fluid, the turbomachine needs the number of rotations that is very large as the number of rotations of a rotation body. That is, it is desired that the turbomachine in a refrigeration cycle apparatus that uses a refrigerant whose saturated vapor pressure is a negative pressure at ordinary temperature as an operating fluid achieve the higher pressure ratio than the pressure ratio of the turbomachine in a refrigeration cycle apparatus that uses a refrigerant whose saturated vapor pressure is a positive pressure at ordinary temperature as an operating fluid. Thus, the turbomachine needs the number of rotations very large as the number of rotations of a rotation body. The present inventors have reached the idea that if the centrifugal force produced through the very large number of rotations is utilizable to apply pressure to the refrigerant, it may be possible to apply sufficiently high static pressure to the refrigerant supplied to the bearing as the lubricant without using a cooling water pump with high performance. On the basis of the aforementioned knowledge, the present inventors have conceived the present disclosure including the aspects described below.

A turbomachine according to a first aspect of the present disclosure is a turbomachine for a refrigeration cycle apparatus that uses a refrigerant whose saturated vapor pressure is a negative pressure at ordinary temperature, the turbomachine including a rotation shaft and a bearing that supports the rotation shaft, where the rotation shaft includes a lubricant supply passage therein, the lubricant supply passage including a main passage that extends from an inlet located at an end of the rotation shaft in an axial direction of the rotation shaft, and one or more sub-passages that diverge from the main passage and that extend to an outlet located in a side surface of the rotation shaft, and while the rotation shaft rotates, the lubricant supply passage supplies the refrigerant to a portion where is located between the rotation shaft and the bearing.

According to the first aspect, with the rotation of the rotation shaft, the refrigerant as the lubricant is supplied to the bearing under pressure through the lubricant supply passage. Accordingly, the pressure of the refrigerant supplied as the lubricant increases and the evaporation of the refrigerant as the lubricant or the occurrence of the cavitation may be suppressed in the bearing. The turbomachine according to the first aspect is oriented toward a refrigeration cycle apparatus that uses a refrigerant whose saturated vapor pressure is a negative pressure at ordinary temperature, and includes the lubricant supply passage for supplying the refrigerant as the lubricant that travels smoothly between the rotation shaft and the bearing. As described above, when the refrigerant whose saturated vapor pressure is a negative pressure at ordinary temperature is used as an operating fluid, the turbomachine needs the number of rotations that is very large as the number of rotations of a rotation body. Thus, according to the first aspect, since the centrifugal force produced through the large number of rotations may be utilized to apply pressure to the refrigerant, high pressure may be applied to the lubricant supplied to the bearing through the lubricant supply passage. Accordingly, shortage of the lubricant in the bearing may be prevented and the reliability of the turbomachine may increase. In addition, the performance that an external pump of the turbomachine for supplying the refrigerant as the lubricant to the lubricant supply passage is desired to offer may be reduced and accordingly, the external pump may be downsized or the cost of the refrigeration cycle apparatus may be lowered.

For example, when water is used in a refrigerator with a refrigerating ability of a 10 kW class as an operating fluid, the number of rotations of the rotation body in the turbomachine is very large, which is in a range from approximately 75 thousand to 90 thousand rpm. In this case, depending on the design, the pressure of the refrigerant liquid supplied between the rotation shaft and the bearing is in a range from approximately 0.5 to 1 MPaA. In contrast, when the turbomachine according to the first aspect is not used, that is, for example, the turbomachine in the study stage, in which the rotation shaft has no lubricant supply passage, is used, the discharge pressure of the external pump of the turbomachine is desired to be in a range from approximately 200 to 400 KPaA so as to suppress the evaporation of the refrigerant and the occurrence of cavitation in the bearing. In contrast, the discharge pressure of the external pump of the turbomachine according to the first aspect is in a range from approximately 50 to 80 KPaA. As described above, according to the first aspect, the performance that the external pump of the turbomachine is desired to offer may be reduced and accordingly, the external pump may be downsized or the cost of the refrigeration cycle apparatus may be lowered.

The first aspect of the present disclosure is favorable, compared with the refrigerator 300 disclosed in International Publication No. 2010/010925 in the points described below.

For example, in the refrigerator 300, the discharge pressure of the cooling water pump 318 is utilized to carry water as the lubricant to the bearing 320 and the reliability of the compressor 301 depends on the performance of the cooling water pump 318. Depending on the performance of the cooling water pump 318, the pressure of the water supplied to the bearing 320 as the lubricant may be insufficient. In this case, the evaporation of the lubricant or the cavitation in the lubricant may occur and cause shortage of the amount of the lubricant in the bearing 320 and the reliability of the compressor 301 may be decreased accordingly. Since the cooling water pump 318 is desired to offer high performance so as to increase the reliability of the compressor 301, the cooling water pump 318 involves the high cost.

In contrast, the turbomachine according to the present disclosure includes the lubricant supply passage that includes the main passage extending from the inlet located at an end of the rotation shaft in the axial direction of the rotation shaft, and the sub-passage diverging from the main passage and extending to the outlet located in the side surface of the rotation shaft, and supplies the refrigerant as the lubricant traveling smoothly between the rotation shaft and the bearing. Thus, the centrifugal force produced through the rotation of the rotation shaft enables pressure to be applied to the refrigerant in the lubricant supply passage and accordingly, the refrigerant to which pressure is applied may be supplied between the rotation shaft and the bearing. That is, since the lubricant supply passage functions as a pump mechanism that utilizes the rotation of the rotation shaft, the occurrence of cavitation may be suppressed without using a cooling water pump that has high performance.

In a second aspect of the present disclosure, the sub-passage of the turbomachine according to the first aspect may intersect a central axis of the main passage and extend along a straight line perpendicular to the central axis. According to the second aspect, the rotation shaft may be processed easily in forming the sub-passage.

In a third aspect of the present disclosure, the outlet of the sub-passage of the turbomachine according to the first aspect may be located at a more backward position in a direction of rotation of the rotation shaft than a point at which a straight line intersects the side surface of the rotation shaft, the straight line connecting a central axis of the main passage and a center of an opening of the sub-passage on a side of the main passage. According to the third aspect, decrease in the pressure of the refrigerant as the lubricant is small while the refrigerant as the lubricant flows through the lubricant supply passage and cavitation is unlikely to occur in the flow of the refrigerant through the lubricant supply passage.

In a fourth aspect of the present disclosure, when viewed in an axial direction of the rotation shaft, the sub-passage of the turbomachine according to the first aspect or the third aspect may be expanded backward in the direction of rotation of the rotation shaft from a position in the sub-passage to the outlet, the position being located between an opening of the sub-passage on the side of the main passage and the outlet. According to the fourth aspect, decrease in the pressure of the refrigerant as the lubricant is small while the refrigerant as the lubricant flows through the lubricant supply passage and cavitation is unlikely to occur in the flow of the refrigerant through the lubricant supply passage

In a fifth aspect of the present disclosure, the lubricant supply passage of the turbomachine according to any one of the first to fourth aspects may include the plurality of sub-passages arranged in the axial direction of the rotation shaft. According to the fifth aspect, the amount of the refrigerant as the lubricant supplied to the bearing through the lubricant supply passage increases. Thus, the cooling ability of the bearing may be enhanced.

In a sixth aspect of the present disclosure, when the sub-passage is viewed from the direction perpendicular to the axial direction of the rotation shaft, a central axis of the sub-passage of the turbomachine according to any one of the first to fifth aspects may be tilted with respect to the central axis of the main passage in the axial direction of the rotation shaft. According to the sixth aspect, the outlet may be located at a position where the lubricant may be supplied suitably to the bearing while enhancing the performance to cool the rotation shaft by forming the main passage as long as possible. Occasionally, the outlet may be located at a position where the lubricant may be supplied suitably to the bearing while simplifying the processing of the rotation shaft by forming the main passage as short as possible.

In a seventh aspect of the present disclosure, the turbomachine according to any one of the first to sixth aspects may further include a storage portion that adjoins the bearing on the side of the inlet and stores the refrigerant as the lubricant, where the inlet located at the end of the rotation shaft may be soaked in the refrigerant stored in the storage portion as the lubricant. According to the seventh aspect, the bearing and the rotation shaft may be cooled by the lubricant stored in the storage portion.

A refrigeration cycle apparatus according to an eighth aspect of the present disclosure includes: a main circuit that circulates a refrigerant whose saturated vapor pressure is a negative pressure at ordinary temperature, the main circuit including an evaporation mechanism that stores a refrigerant liquid and evaporates the refrigerant liquid, the turbomachine according to any one of the first to seventh aspects that is a compressor that compresses refrigerant vapor, and a condensation mechanism that condenses refrigerant vapor and stores a refrigerant liquid, the evaporation mechanism, the turbomachine, and the condensation mechanism being connected in named order; an evaporation-side circulation circuit that includes a heat-absorption-side liquid carrying pump and a heat-absorption heat exchanger, the heat-absorption-side liquid carrying pump causing the refrigerant liquid stored in the evaporation mechanism to be supplied to the heat-absorption heat exchanger, the refrigerant after heat absorption in the heat-absorption heat exchanger being returned to the evaporation mechanism; a condensation-side circulation circuit that includes a heat-radiation-side liquid carrying pump and a heat-radiation heat exchanger, the heat-radiation-side liquid carrying pump causing the refrigerant liquid stored in the condensation mechanism to be supplied to the heat-radiation heat exchanger, the refrigerant after heat radiation in the heat-radiation heat exchanger being returned to the condensation mechanism; and an upstream-side supply passage that diverges from the evaporation-side circulation circuit at a position downstream of an exit of the heat-absorption-side liquid carrying pump in the evaporation-side circulation circuit or diverges from the condensation-side circulation circuit at a position downstream of an exit of the heat-radiation-side liquid carrying pump in the condensation-side circulation circuit, and supplies the refrigerant to the lubricant supply passage.

According to the eighth aspect, since the refrigerant to which pressure is applied through the heat-absorption-side liquid carrying pump or the heat-radiation-side liquid carrying pump is supplied to the lubricant supply passage through the upstream-side supply passage, the pressure of the refrigerant as the lubricant supplied to the bearing may be further raised.

Embodiments of the present disclosure are described below with reference to the drawings. The description below relates to examples of the present disclosure and the present disclosure is not limited by the examples.

### <Turbomachine>

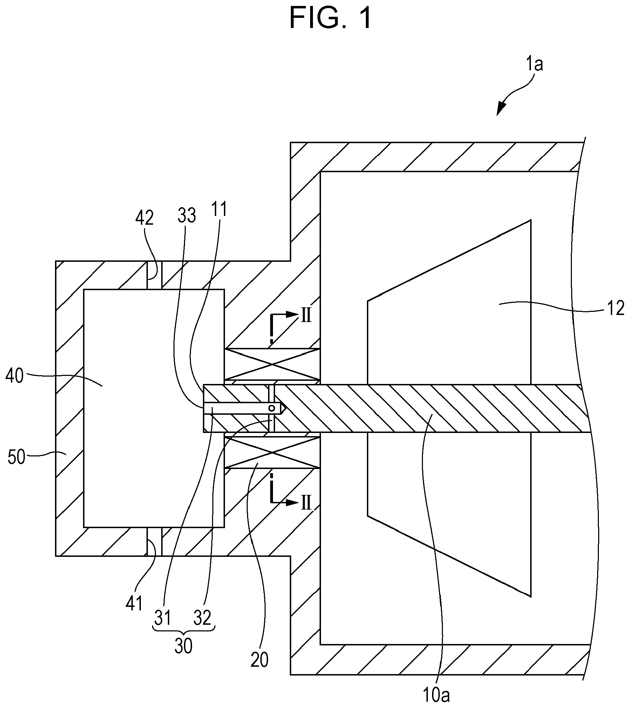

As illustrated in FIG. 1, a turbomachine 1a includes a rotation shaft 10a and a bearing 20. The turbomachine 1a is a turbomachine for a refrigeration cycle apparatus that uses a refrigerant whose saturated vapor pressure is a negative pressure at ordinary temperature. The turbomachine 1a is typically a turbocompressor. The turbomachine 1a is configured as a fluid machine of, for example, a centrifugal type, an axial-flow type, or a diagonal-flow type. The bearing 20 is a bearing for supporting the rotation shaft 10a and is, for example, a slide bearing that supports the radial load of the rotation shaft 10a. An impeller 12 is attached to the rotation shaft 10a. The rotation shaft 10a is connected to a motor, which is not illustrated. When the motor is driven, the rotation shaft 10a and the impeller 12 rotate. Thus, the refrigerant of the refrigeration cycle apparatus is sucked into the turbomachine 1a and discharged from the turbomachine 1a after being compressed. The refrigerant is not limited in particular as long as the saturated vapor pressure of the refrigerant is a negative pressure at ordinary temperature, and examples of the refrigerant include a refrigerant that contains mainly water, alcohol, or ether. The turbomachine 1a is operated at pressure near the saturated vapor pressure of the refrigerant of the refrigeration cycle apparatus. The pressure at the entrance of the turbomachine 1a is in a range from, for example, 0.5 to 5 kPaA. The pressure at the exit of the turbomachine 1a is in a range from, for example, 5 to 15 kPaA.

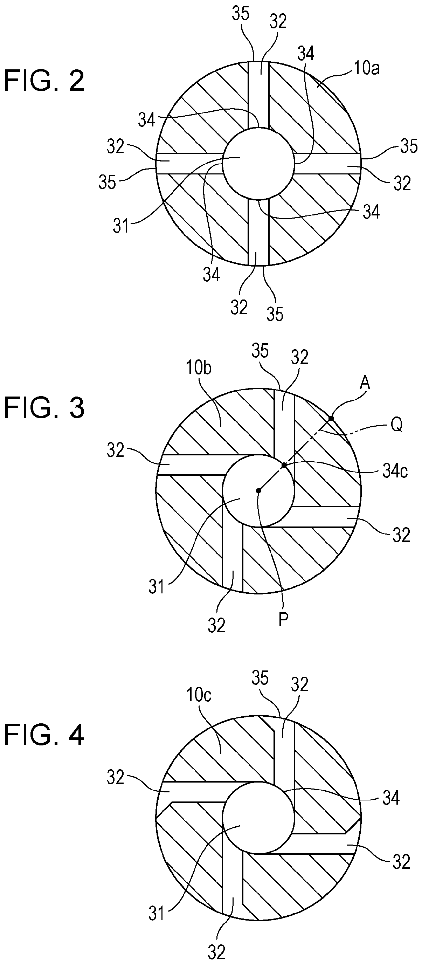

The rotation shaft 10a includes a lubricant supply passage 30. The lubricant supply passage 30 is a passage for supplying the refrigerant of the refrigeration cycle apparatus as the lubricant that travels smoothly between the rotation shaft 10a and the bearing 20. During the operation of the refrigeration cycle apparatus, the lubricant supply passage 30 is filled with the refrigerant of the refrigeration cycle apparatus liquid. The lubricant supply passage 30 includes a main passage 31 and a sub-passage 32. As illustrated in FIG. 1, the main passage 31 extends from an inlet 33 located at an end 11 of the rotation shaft 10a in the axial direction of the rotation shaft 10a. The sub-passages 32 diverge from the main passage 31 and extend to outlets 35 located in the side surface of the rotation shaft 10a. As illustrated in FIG. 1, the sub-passage 32 is located so that the outlet 35 faces the slide surface of the bearing 20. In FIG. 2, although the lubricant supply passage 30 includes four sub-passages as the sub-passages 32 positioned in the circumferential direction of the rotation shaft 10a, the lubricant supply passage 30 may include one sub-passage 32 or include two, three, five, or more sub-passages 32 positioned in the circumferential direction of the rotation shaft 10a.

During the operation of the turbomachine 1a, the rotation shaft 10a rotates at high speed. The centrifugal force produced through the rotation of the rotation shaft 10a causes the refrigerant of the refrigeration cycle apparatus in the lubricant supply passage 30 to be supplied between the rotation shaft 10a and the bearing 20 while pressure is being applied to the refrigerant of the refrigeration cycle apparatus in the lubricant supply passage 30. Specifically, the refrigerant liquid of the refrigeration cycle apparatus that flows into the main passage 31 from the inlet 33 flows through the main passage 31 in the axial direction. After that, the refrigerant liquid is guided to the sub-passage 32 and flows through the sub-passage 32 and out from the outlet 35. The refrigerant liquid supplied between the rotation shaft 10a and the bearing 20 travels smoothly between the rotation shaft 10a and the bearing 20. In this manner, the lubricant supply passage 30 functions as a pump mechanism that utilizes the rotation of the rotation shaft 10a and the refrigerant liquid as the lubricant is supplied between the rotation shaft 10a and the bearing 20 at predetermined pressure. As described above, the turbomachine 1a is operated at pressure near the saturated vapor pressure of the refrigerant of the refrigeration cycle apparatus. Since the lubricant supply passage 30 functions as a pump mechanism that utilizes the rotation of the rotation shaft 10a, the pressure of the refrigerant liquid supplied between the rotation shaft 10a and the bearing 20 is high. The evaporation of the refrigerant liquid supplied between the rotation shaft 10a and the bearing 20 as the lubricant or the occurrence of cavitation in the lubricant may be suppressed accordingly. In addition, as the number of rotations of the rotation shaft 10a increases, the pressure of the lubricant supplied to the bearing 20 through the lubricant supply passage 30 becomes higher. Thus, shortage of the lubricant in the bearing 20 may be prevented and the turbomachine 1a has high reliability.

As long as the rotation shaft 10a of the turbomachine 1a rotates, the lubricant may be supplied to the bearing 20. For example, even when power failure or the like stops the supply of power to the motor that drives the rotation shaft 10a, not illustrated, the lubricant may be supplied to the bearing 20 as long as the rotation shaft 10a rotates and thus, the rotation shaft 10a may be stopped safely.

The turbomachine 1a includes a casing 50. A storage portion 40 is included in the casing 50. That is, the turbomachine 1a further includes the storage portion 40. The storage portion 40 is a space for storing the lubricant. The storage portion 40 stores the lubricant. The storage portion 40 adjoins the bearing 20 on the side of the inlet 33. The end 11 of the rotation shaft 10a is soaked in the lubricant stored in the storage portion 40. The casing 50 is provided with a supply hole 41 and a discharge hole 42. The refrigerant in a specific location of the refrigeration cycle apparatus is supplied to the storage portion 40 through the supply hole 41 using, for example, an external pump of the turbomachine 1a, and stored in the storage portion 40 as the lubricant. The refrigerant is discharged from the storage portion 40 through the discharge hole 42 and is returned to the specific location of the refrigeration cycle apparatus. The lubricant stored in the storage portion 40 is continuously supplied to the bearing 20 through the lubricant supply passage 30 because of the rotation of the rotation shaft 10a. Further, the lubricant stored in the storage portion 40 cools the bearing 20 and the rotation shaft 10a.

As described above, the refrigeration cycle apparatus is desirably provided with a pump outside the turbomachine 1a so as to supply the refrigerant as the lubricant from a specific location of the refrigeration cycle apparatus to the lubricant supply passage 30. In this case, it is desirable to set the discharge pressure of the external pump so that the pressure of the refrigerant at the inlet 33 is equal to or more than the saturated vapor pressure. Thus, the occurrence of cavitation may be suppressed in the lubricant supply passage 30 and shortage of the amount of the lubricant to be supplied to the bearing 20 may be prevented. Since the refrigerant as the lubricant is supplied between the rotation shaft 10a and the bearing 20 at high pressure by passing through the lubricant supply passage 30, the performance that the external pump is desired to offer may be reduced. Thus, the external pump may be downsized or the cost of the refrigeration cycle apparatus may be lowered.

For example, when water is used in a refrigerator with a refrigerating ability of a 10 kW class as an operating fluid, the number of rotations of the rotation body in the turbomachine is very large, which is in a range from approximately 75 thousand to 90 thousand rpm. In this case, depending on the design, the pressure of the refrigerant liquid supplied between the rotation shaft and the bearing is in a range from approximately 0.5 to 1 MPaA. In contrast, when the turbomachine according to the present disclosure is not used, that is, for example, the turbomachine in the study stage, in which the rotation shaft has no lubricant supply passage, is used, the discharge pressure of the external pump of the turbomachine is desired to be in a range from approximately 200 to 400 KPaA so as to suppress the evaporation of the refrigerant and the occurrence of cavitation in the bearing. In contrast, the discharge pressure of the external pump of the turbomachine according to the present embodiment is in a range from approximately 50 to 80 KPaA. As described above, according to the present embodiment, the performance that the external pump of the turbomachine is desired to offer may be reduced and accordingly, the external pump may be downsized or the cost of the refrigeration cycle apparatus may be lowered.

As illustrated in FIG. 2, the sub-passage 32 is located so that a distance between the center of an opening 34 of the sub-passage 32 on the side of the main passage 31 and the center of the outlet 35 is the shortest. The sub-passage 32 is located so as to extend straight. The sub-passage 32 is located so that a straight line that connects the center of the opening 34 of the sub-passage 32 on the side of the main passage 31 and the center of the outlet 35 passes through a specific point on the central axis of the main passage 31 and is orthogonal to the central axis of the main passage 31. Accordingly, the rotation shaft 10a may be processed easily in forming the sub-passage 32.

### [Variations]

The above-described turbomachine 1a may be changed in various terms. Variations of the turbomachine 1a are described below. The same reference alphanumeric characters are given to the elements in the variations that are the same as or correspond to the elements in the above-described turbomachine 1a, and the detailed description of such elements is omitted.

The rotation shaft 10a of the turbomachine 1a may be changed like a rotation shaft 10b illustrated in FIG. 3. In the rotation shaft 10b, sub-passages 32 are located so that outlets 35 are located in more backward positions in the direction of the rotation of the rotation shaft 10b than a point A. The point A is a point at which a straight line Q, which connects a central axis P of a main passage 31 and a center 34c of an opening 34 of the sub-passage 32 on the side of the main passage 31 and is perpendicular to the central axis P of the main passage 31 and a side surface of the rotation shaft 10a intersect. In FIG. 3, the rotation shaft 10b rotates clockwise during the operation of the turbomachine 1a. There are possibilities that when the refrigerant flows from the main passage 31 into the sub-passage 32, the pressure of the refrigerant as the lubricant may decrease as the flow of the refrigerant changes and cavitation may be caused in the flow of the refrigerant through a lubricant supply passage 30. By forming the sub-passage 32 in the rotation shaft 10b as described above, change in the velocity of the flow of the refrigerant may be made small and decrease in the pressure of the refrigerant as the lubricant may be suppressed when the refrigerant flows from the main passage 31 into the sub-passage 32. Accordingly, cavitation is unlikely to occur in the flow of the refrigerant through the lubricant supply passage 30.

The rotation shaft 10a of the turbomachine 1a may be changed like a rotation shaft 10c illustrated in FIG. 4. In the rotation shaft 10c, sub-passages 32 are viewed from the side of an inlet 33 in the axial direction of the rotation shaft 10c. Each of the sub-passages 32 bends backward in the direction in which the rotation shaft 10c rotates from a position in the sub-passage 32 to an outlet 35, and the position is located between an opening 34 of the sub-passage 32 on the side of a main passage 31 and the outlet 35. In FIG. 4, the rotation shaft 10c rotates clockwise during the operation of the turbomachine 1a. By forming the sub-passage 32 as described above, change in the velocity of the flow of the refrigerant may be made small and decrease in the pressure of the refrigerant as the lubricant may be suppressed when the refrigerant flows through the sub-passage 32. Accordingly, cavitation is unlikely to occur in the flow of the refrigerant through a lubricant supply passage 30. As illustrated in FIG. 4, the sub-passage 32 is located so that the passage cross-sectional area of the sub-passage 32 is enlarged from the position at which the sub-passage 32 bends toward the outlet 35. Thus, the refrigerant as the lubricant in the sub-passage 32 may flow out easily through the outlet 35.

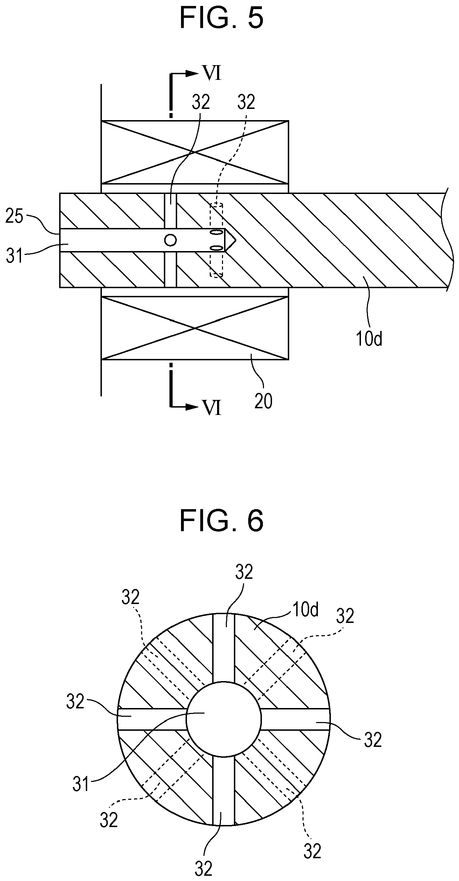

The rotation shaft 10a of the turbomachine 1a may be changed like a rotation shaft 10d illustrated in FIGs. 5 and 6. As illustrated in FIG. 5, in the rotation shaft 10d, a lubricant supply passage 30 includes a plurality of sub-passages 32 arranged in the axial direction of the rotation shaft 10d. Accordingly, the amount of the refrigerant as the lubricant supplied to the bearing 20 through the lubricant supply passage 30 increases. In addition, unevenness in the amount of the refrigerant supplied to the bearing 20 in the axial direction of the rotation shaft 10d may be suppressed. In this case, as illustrated in FIGs. 5 and 6, the lubricant supply passage 30 includes a plurality of sub-passage groups (two in the example of FIGs. 5 and 6), each of which includes the plurality of sub-passages 32 (four in the example of FIGs. 5 and 6) arranged in the circumferential direction of the rotation shaft 10d. The plurality of sub-passage groups are arranged in the axial direction of the rotation shaft 10d. As illustrated in FIG. 6, the sub-passages 32 that belong to one of the sub-passage groups arranged in the axial direction of the rotation shaft 10d are shifted in the circumferential direction of the rotation shaft 10d from the positions of the sub-passages 32 that belong to another one of the sub-passage groups. Specifically, the sub-passages 32 that belong to one of the sub-passage groups arranged in the axial direction of the rotation shaft 10d are shifted in the circumferential direction of the rotation shaft 10d from the positions of the sub-passages 32 that belong to another one of the sub-passage groups by approximately 45°. As a result, unevenness in the amount of the refrigerant supplied to the bearing 20 in the circumferential direction of the rotation shaft 10d may be suppressed. In the rotation shaft 10d, the sub-passages 32 may be located as illustrated in FIG. 3 or 4.

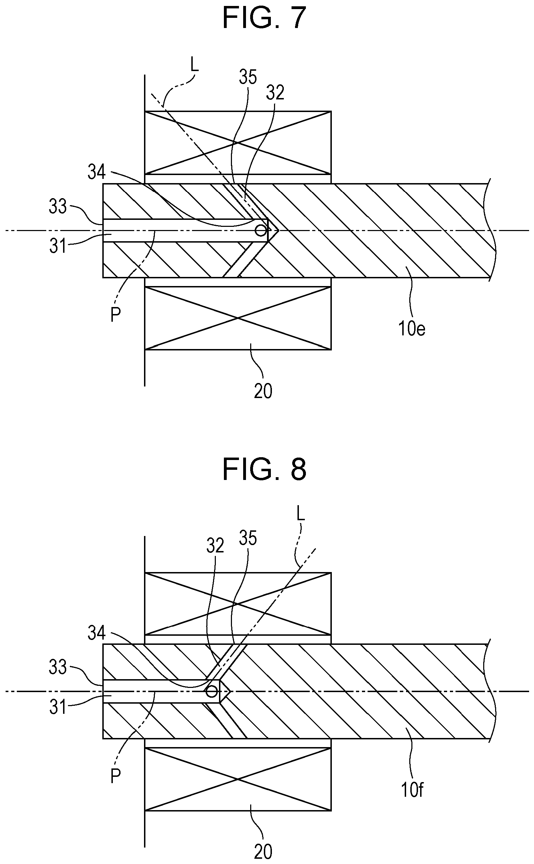

The rotation shaft 10a of the turbomachine 1a may be changed like a rotation shaft 10e illustrated in FIG. 7 or a rotation shaft 10f illustrated in FIG. 8. In the rotation shaft 10e or the rotation shaft 10f, sub-passages 32 are located so that a central axis L of the sub-passage 32 is tilted in the axial direction of the rotation shaft 10e or the rotation shaft 10f with respect to a central axis P of a main passage 31. The sub-passages 32 are located so that in the axial direction of the rotation shaft 10e, an outlet 35 is closer to an inlet 33 than an opening 34 of the sub-passage 32 on the side of the main passage 31 is. By forming the sub-passages 32 in this manner, the main passage 31 may be located as long as possible and the performance of cooling the rotation shaft 10e may be enhanced while the outlets 35 may be located at positions desirable for supplying the lubricant to the bearing 20. For example, the outlets 35 may be located near the center of the bearing 20 in the axial direction of the rotation shaft 10e.

In the axial direction of the rotation shaft 10f, the sub-passages 32 are located so that an outlet 35 is farther away from an inlet 33 than an opening 34 of the sub-passage 32 on the side of the main passage 31 is. By forming the sub-passages 32 in this manner, even when the main passage 31 is located as short as possible and the processing of the rotation shaft 10f is simplified, the outlets 35 may be located at positions desirable for supplying the lubricant to the bearing 20. For example, the outlets 35 may be located near the center of the bearing 20 in the axial direction of the rotation shaft 10f.

### <Refrigeration Cycle Apparatus>

A refrigeration cycle apparatus that includes the above-described turbomachine 1a is described below.

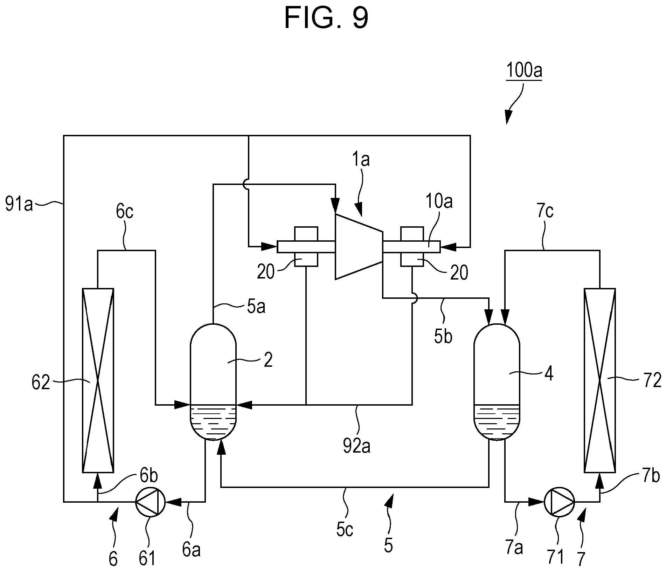

As illustrated in FIG. 9, a refrigeration cycle apparatus 100a includes a main circuit 5, an evaporation-side circulation circuit 6, a condensation-side circulation circuit 7, and an upstream-side supply passage 91a. The main circuit 5 includes an evaporation mechanism 2, the turbomachine 1a, and a condensation mechanism 4. The evaporation mechanism 2 stores a refrigerant liquid and evaporates the refrigerant liquid. The evaporation mechanism 2 is made up of, for example, a container with heat insulating properties and resistance to pressure. The turbomachine 1a is a compressor that compresses refrigerant vapor. The condensation mechanism 4 condenses the refrigerant vapor and stores the refrigerant liquid. The condensation mechanism 4 is made up of, for example, a container with heat insulating properties and resistance to pressure. The main circuit 5 is a circuit in which the evaporation mechanism 2, the turbomachine 1a, and the condensation mechanism 4 are connected in named order. The exit of the evaporation mechanism 2 and the entrance of the turbomachine 1a are connected through a passage 5a. The exit of the turbomachine 1a and the entrance of the condensation mechanism 4 are connected through a passage 5b. The exit of the condensation mechanism 4 and the entrance of the evaporation mechanism 2 are connected through a passage 5c. The main circuit 5 is filled with, for example, a refrigerant that contains mainly water, alcohol, or ether, and kept in a state of a negative pressure lower than atmospheric pressure. The refrigeration cycle apparatus 100a is included in, for example, air conditioning equipment for air cooling purpose.

The evaporation-side circulation circuit 6 includes a heat-absorption-side liquid carrying pump 61 and a heat-absorption heat exchanger 62. The evaporation-side circulation circuit 6 is configured so that the refrigerant liquid stored in the evaporation mechanism 2 is supplied to the heat-absorption heat exchanger 62 with the heat-absorption-side liquid carrying pump 61 and the refrigerant after heat absorption in the heat-absorption heat exchanger 62 is returned to the evaporation mechanism 2. In the evaporation-side circulation circuit 6, the evaporation mechanism 2 and the entrance of the heat-absorption-side liquid carrying pump 61 are connected through a passage 6a. The exit of the heat-absorption-side liquid carrying pump 61 and the entrance of the heat-absorption heat exchanger 62 are connected through a passage 6b. Further, the exit of the heat-absorption heat exchanger 62 and the evaporation mechanism 2 are connected through a passage 6c. The refrigerant liquid in the evaporation mechanism 2, which has a temperature decreased as a result of the evaporation of the refrigerant in the evaporation mechanism 2, is carried by the heat-absorption-side liquid carrying pump 61 to the heat-absorption heat exchanger 62 under pressure. The refrigerant liquid is heated in the heat-absorption heat exchanger 62 and returned to the evaporation mechanism 2. The passage 6c may be provided with a pressure reducing mechanism for reducing the pressure of the refrigerant after the heat absorption in the heat-absorption heat exchanger 62. The heat-absorption heat exchanger 62 cools indoor air through the heat absorption of the refrigerant in the heat-absorption heat exchanger 62.

The condensation-side circulation circuit 7 includes a heat-radiation-side liquid carrying pump 71 and a heat-radiation heat exchanger 72. The condensation-side circulation circuit 7 is configured so that the refrigerant liquid stored in the condensation mechanism 4 is supplied to the heat-radiation heat exchanger 72 with the heat-radiation-side liquid carrying pump 71 and the refrigerant after heat radiation in the heat-radiation heat exchanger 72 is returned to the condensation mechanism 4. In the condensation-side circulation circuit 7, the condensation mechanism 4 and the entrance of the heat-radiation-side liquid carrying pump 71 are connected through a passage 7a. The exit of the heat-radiation-side liquid carrying pump 71 and the entrance of the heat-radiation heat exchanger 72 are connected through a passage 7b. The exit of the heat-radiation heat exchanger 72 and the condensation mechanism 4 are connected through a passage 7c. The refrigerant cooled indirectly in the heat-radiation heat exchanger 72 is guided to the condensation mechanism 4 through the passage 7c. Thus, the refrigerant vapor compressed in the turbomachine 1a is cooled and condensed. The refrigerant liquid that has a temperature raised through the condensation in the condensation mechanism 4 is carried to the heat-radiation heat exchanger 72 with the heat-radiation-side liquid carrying pump 71 under pressure and cooled indirectly in the heat-radiation heat exchanger 72, and then returned to the condensation mechanism 4. In the heat-radiation heat exchanger 72, the refrigerant radiates heat against outdoor air.

The upstream-side supply passage 91a diverges from the evaporation-side circulation circuit 6 at a position downstream of the exit of the heat-absorption-side liquid carrying pump 61 in the evaporation-side circulation circuit 6. The upstream-side supply passage 91a is a passage for supplying the refrigerant to the lubricant supply passage 30 of the turbomachine 1a. For example, the upstream-side supply passage 91a diverges from the evaporation-side circulation circuit 6 at a position between the exit of the heat-absorption-side liquid carrying pump 61 and the entrance of the heat-absorption heat exchanger 62 in the evaporation-side circulation circuit 6. Further, the upstream-side supply passage 91a is connected to the turbomachine 1a so as to communicate with the lubricant supply passage 30. For example, the refrigerant that travels through the upstream-side supply passage 91a passes through the supply hole 41 to be supplied to the storage portion 40. As described above, the refrigerant to which pressure has been applied with the heat-absorption-side liquid carrying pump 61 passes through the upstream-side supply passage 91a to be supplied to the lubricant supply passage 30 as the lubricant. In this case, the discharge pressure of the heat-absorption-side liquid carrying pump 61 is desirably set so that the pressure of the refrigerant at the inlet 33 of the lubricant supply passage 30 is equal to or more than the saturated vapor pressure. When the upstream-side supply passage 91a diverges from the evaporation-side circulation circuit 6 at a position between the exit of the heat-absorption-side liquid carrying pump 61 and the entrance of the heat-absorption heat exchanger 62 in the evaporation-side circulation circuit 6, the refrigerant with a relatively low temperature may be supplied to the lubricant supply passage 30. Thus, the lubricant may enhance the ability of cooling the rotation shaft 10a and the bearing 20.

The upstream-side supply passage 91a may diverge from the evaporation-side circulation circuit 6 at a position between the exit of the heat-absorption heat exchanger 62 in the evaporation-side circulation circuit 6 and the evaporation mechanism 2. Also in this case, part of the refrigerant of the refrigeration cycle apparatus 100a may be supplied to the lubricant supply passage 30 as the lubricant.

The refrigeration cycle apparatus 100a further includes a return passage 92a. The return passage 92a is a passage for returning the refrigerant supplied to the lubricant supply passage 30 through the upstream-side supply passage 91a to the main circuit 5. For example, the return passage 92a communicates with the storage portion 40 via the discharge hole 42. Further, the return passage 92a is connected to the evaporation mechanism 2. The refrigerant stored in the storage portion 40 is guided to the return passage 92a through the discharge hole 42 to flow through the return passage 92a and is returned into the evaporation mechanism 2. The return passage 92a may be connected to the condensation mechanism 4 so as to return the refrigerant to the condensation mechanism 4.

The refrigeration cycle apparatus 100a may be included in, for example, air conditioning equipment where cooling and heating modes are switchable. In this case, an indoor heat exchanger placed indoors and an outdoor heat exchanger placed outdoors are connected to the evaporation mechanism 2 and the condensation mechanism 4 via a four-way valve. In the cooling mode, the indoor heat exchanger functions as the heat-absorption heat exchanger 62 and the outdoor heat exchanger functions as the heat-radiation heat exchanger 72. In the heating mode, the indoor heat exchanger functions as the heat-radiation heat exchanger 72 and the outdoor heat exchanger functions as the heat-absorption heat exchanger 62. The refrigeration cycle apparatus 100a may be included in, for example, a chiller. For example, the heat-absorption heat exchanger 62 may cool gas other than air or liquid through the heat absorption of the refrigerant. For example, the heat-radiation heat exchanger 72 may heat gas other than air or liquid through the heat radiation of the refrigerant. The heat-absorption heat exchanger 62 and the heat-radiation heat exchanger 72 are not limited in particular as long as the heat-absorption heat exchanger 62 and the heat-radiation heat exchanger 72 are indirect heat exchangers.

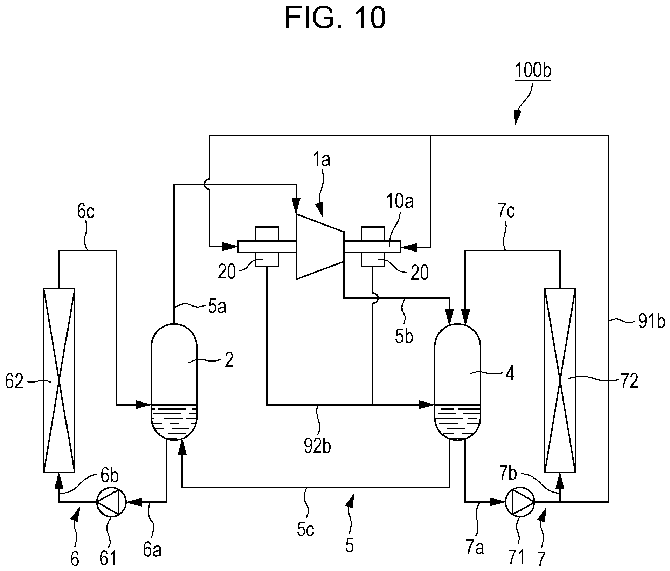

The refrigeration cycle apparatus 100a may be changed like a refrigeration cycle apparatus 100b illustrated in FIG. 10. The refrigeration cycle apparatus 100b has a configuration the same as the configuration of the refrigeration cycle apparatus 100a unless otherwise described. The same reference alphanumeric characters are given to the elements in the refrigeration cycle apparatus 100b that are the same as or correspond to the elements in the refrigeration cycle apparatus 100a, and the detailed description of such elements is omitted. The description of the refrigeration cycle apparatus 100a is applicable to the refrigeration cycle apparatus 100b as long as no technical contradiction arises.

The refrigeration cycle apparatus 100b includes an upstream-side supply passage 91b and a return passage 92b instead of the upstream-side supply passage 91a and the return passage 92a. The upstream-side supply passage 91b diverges from the condensation-side circulation circuit 7 at a position downstream of the exit of the heat-radiation-side liquid carrying pump 71 in the condensation-side circulation circuit 7. The upstream-side supply passage 91b is a passage for supplying a refrigerant to the lubricant supply passage 30 of the turbomachine 1a. For example, the upstream-side supply passage 91b diverges from the condensation-side circulation circuit 7 at a position between the exit of the heat-radiation-side liquid carrying pump 71 and the entrance of the heat-radiation heat exchanger 72. Further, the upstream-side supply passage 91b is connected to the turbomachine 1a so as to communicate with the lubricant supply passage 30. For example, the refrigerant that travels through the upstream-side supply passage 91b passes through the supply hole 41 to be supplied to the storage portion 40. As described above, the refrigerant to which pressure has been applied with the heat-radiation-side liquid carrying pump 71 passes through the upstream-side supply passage 91b to be supplied to the lubricant supply passage 30 as the lubricant. In this case, the discharge pressure of the heat-radiation-side liquid carrying pump 71 is desirably set so that the pressure of the refrigerant at the inlet 33 of the lubricant supply passage 30 is equal to or more than the saturated vapor pressure.

The upstream-side supply passage 91b may diverge from the condensation-side circulation circuit 7 at a position between the exit of the heat-radiation heat exchanger 72 and the condensation mechanism 4 in the condensation-side circulation circuit 7. Also in this case, part of the refrigerant of the refrigeration cycle apparatus 100b may be supplied to the lubricant supply passage 30 as the lubricant.

The return passage 92b is a passage for returning the refrigerant supplied to the lubricant supply passage 30 through the upstream-side supply passage 91b to the main circuit 5. For example, the return passage 92b communicates with the storage portion 40 via the discharge hole 42. Further, the return passage 92b is connected to the condensation mechanism 4. The refrigerant stored in the storage portion 40 is guided to the return passage 92b through the discharge hole 42 to flow through the return passage 92b and is returned into the condensation mechanism 4. The return passage 92a may be connected to the evaporation mechanism 2 so as to return the refrigerant to the evaporation mechanism 2.

According to the present embodiment, with the rotation of the rotation shaft, the refrigerant as the lubricant is supplied under pressure to the bearing through the lubricant supply passage in the turbomachine. Accordingly, the pressure of the refrigerant supplied as the lubricant increases and the evaporation of the refrigerant as the lubricant or the occurrence of the cavitation may be suppressed in the bearing. According to the present embodiment, the refrigerant as the lubricant is a refrigerant whose saturated vapor pressure is a negative pressure at ordinary temperature. As described above, when the refrigerant whose saturated vapor pressure is a negative pressure at ordinary temperature is used as an operating fluid, the turbomachine needs the number of rotations that is very large as the number of rotations of a rotation body. Since in the refrigeration cycle apparatus according to the present embodiment, the centrifugal force produced through the large number of rotations may be utilized to apply pressure to the refrigerant, high pressure may be applied to the lubricant supplied to the bearing through the lubricant supply passage. As a result, shortage of the lubricant in the bearing may be prevented and the reliability of the turbomachine may increase. In addition, the performance that the external pump of the turbomachine for supplying the refrigerant as the lubricant to the lubricant supply passage is desired to offer may be reduced and accordingly, the external pump may be downsized or the cost of the refrigeration cycle apparatus may be lowered.

For example, when water is used as an operating fluid, the number of rotations of the rotation body in the turbomachine is very large, which is in a range from approximately 75 thousand to 90 thousand rpm. In this case, depending on the design, the pressure of the refrigerant liquid supplied between the rotation shaft and the bearing is in a range from approximately 0.5 to 1 MPaA. In contrast, when the turbomachine according to the present disclosure is not used, that is, for example, the turbomachine in the study stage, in which the rotation shaft has no lubricant supply passage, is used, the discharge pressure of the external pump of the turbomachine is desired to be in a range from approximately 300 to 500 KPaA so as to suppress the evaporation of the refrigerant and the occurrence of cavitation in the bearing. In contrast, the discharge pressure of the external pump of the turbomachine according to the present embodiment, which is the heat-absorption-side liquid carrying pump 61 illustrated in FIG. 9, is in a range from approximately 150 to 180 KPaA. As described above, according to the present embodiment, the performance that the external pump of the turbomachine is desired to offer may be reduced and accordingly, the external pump may be downsized or the cost of the refrigeration cycle apparatus may be lowered.

### [Variations]

The refrigeration cycle apparatus 100a and the refrigeration cycle apparatus 100b may be changed in various terms. For example, the turbomachine 1a may include compression mechanisms of a plurality of stages. In this case, an intermediate cooler for cooling the refrigerant may be provided between the compression mechanisms. For example, when the turbomachine 1a includes compression mechanisms of two stages, the temperature of the refrigerant vapor discharged from the compression mechanism at the first stage is 110°C. The temperature of the refrigerant vapor discharged from the compression mechanism at the second stage is, for example, 170°C. When an intermediate cooler is provided between the compression mechanism at the first stage and the compression mechanism at the second stage, the refrigerant vapor discharged from the compression mechanism at the first stage is cooled by the intermediate cooler. In this case, the temperature of the refrigerant vapor sucked into the compression mechanism at the second stage is, for example, 45°C.

The turbomachine 1a and another compressor may be connected in series. The other compressor may be a positive-displacement compressor or a turbocompressor. In this case, an intermediate cooler may be provided between the turbomachine 1a and the other compressor.

The passage 5c may be provided with an expansion mechanism, such as a capillary or an expansion valve.

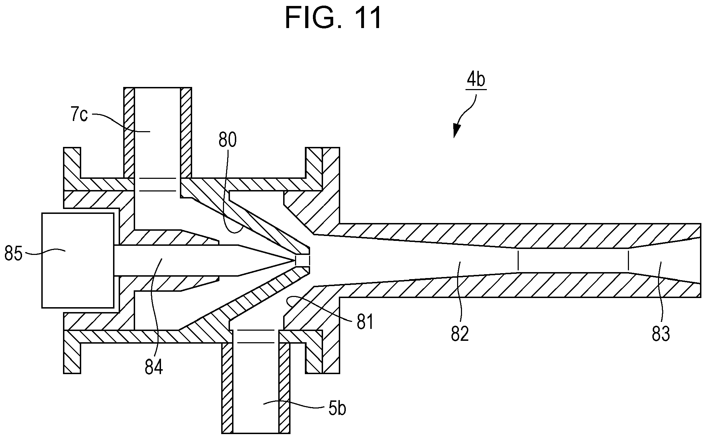

In the condensation mechanism 4, an ejector 4b illustrated in FIG. 11 may be used. As illustrated in FIG. 11, the ejector 4b includes a first nozzle 80, a second nozzle 81, a mixing unit 82, and a diffuser unit 83. The passage 7c is connected to the first nozzle 80. The refrigerant liquid that flows out from the heat-radiation heat exchanger 72 through the passage 7c is supplied to the first nozzle 80 as a driving flow. The passage 5b is connected to the second nozzle 81. The temperature of the refrigerant liquid ejected from the first nozzle 80 is lowered by the heat-radiation heat exchanger 72. Thus, the ejection of the refrigerant liquid from the first nozzle 80 causes the pressure of the mixing unit 82 to be lower than the pressure of the passage 5b. Consequently, the refrigerant vapor with pressure equal to or lower than the atmospheric pressure is continuously sucked into the second nozzle 81 through the passage 5b.

The refrigerant liquid ejected from the first nozzle 80 while accelerating and the refrigerant vapor ejected from the second nozzle 81 while expanding and accelerating are mixed in the mixing unit 82. Then, a refrigerant mixture with a small quality (dryness) is generated because of first condensation caused by the difference in temperature between the refrigerant liquid and the refrigerant vapor and second condensation caused by the pressure raising effect based on the transportation of energy between the refrigerant liquid and the refrigerant vapor and the transportation of momentum between the refrigerant liquid and the refrigerant vapor. When the quality of the refrigerant mixture is not zero, the velocity of flow of the refrigerant mixture exceeds the velocity of sound of two-phase flow and abrupt rising of the pressure occurs, and the condensation is further promoted. The generated refrigerant mixture is a refrigerant in a liquid-phase state or a gas-liquid two-phase state of a very small quality. After that, the diffuser unit 83 regains static pressure by reducing the velocity of the refrigerant mixture. In the ejector 4b configured as described above, the temperature and the pressure of the refrigerant rise.

The ejector 4b further includes a needle valve 84 and a servo actuator 85. The needle valve 84 and the servo actuator 85 are flow-rate regulators for regulating the flow rate of the refrigerant liquid as a driving flow. The needle valve 84 enables the cross-sectional area of an orifice at the tip of the first nozzle 80 to be changed. The servo actuator 85 enables the position of the needle valve 84 to be adjusted. Thus, the flow rate of the refrigerant liquid that flows through the first nozzle 80 may be regulated.

The refrigeration cycle apparatus according to the present disclosure is useful for a home air conditioner or an industrial air conditioner in particular. Moreover, the refrigeration cycle apparatus according to the present disclosure is applicable to a chiller or a heat pump.

## Claims

1. A turbomachine (1a) for a refrigeration cycle apparatus that uses a refrigerant whose saturated vapor pressure is lower than atmospheric pressure at ordinary temperature specified as 20° C ± 15° C, the turbomachine (1a) comprising:
a rotation shaft (10a - 10f); and
a bearing (20) that supports the rotation shaft (10a - 10f), **characterized in that**
the rotation shaft (10a - 10f) includes a lubricant supply passage (30) containing
a main passage (31) that extends from an inlet (33) located at an end of the rotation shaft (10a - 10f) in an axial direction of the rotation shaft (10a - 10f), and
one or more sub-passages (32) that diverge from the main passage (31) and that extend to an outlet (35) located in a side surface of the rotation shaft (10a - 10f), and
while the rotation shaft (10a - 10f) rotates, the lubricant supply passage (30) supplies only the refrigerant to a portion where is located between the rotation shaft (10a - 10f) and the bearing (20).

2. The turbomachine (1a) according to Claim 1, wherein
the sub-passage (32) intersects a central axis (P) of the main passage (30) and extends along a straight line perpendicular to the central axis (P).

3. The turbomachine (1a) according to Claim 1, wherein
the outlet (35) of the sub-passage (32) is located at a more backward position in a direction of rotation of the rotation shaft (10b, 10c) than a point at which a straight line (Q) intersects the side surface of the rotation shaft (10b, 10c), the straight line (Q) connecting a central axis (P) of the main passage (31) and a center of an opening of the sub-passage (32) on a side of the main passage (31).

4. The turbomachine (1a) according to Claim 1, wherein
when the sub-passage (32) is viewed in an axial direction of the rotation shaft (10c), the sub-passage (32) is expanded backward in a direction of rotation of the rotation shaft (10c) from a position in the sub-passage (32) to the outlet (35), the position being located between an opening of the sub-passage (32) on a side of the main passage (31) and the outlet (35).

5. The turbomachine (1a) according to Claim 1, wherein
the lubricant supply passage (30) includes the plurality of sub-passages (32) arranged in the axial direction of the rotation shaft (10d).

6. The turbomachine (1a) according to Claim 1, wherein
when the sub-passage (32) is viewed from a direction perpendicular to the axial direction of the rotation shaft (10e, 10f), a central axis (L) of the sub-passage (32) is tilted with respect to a central axis (P) of the main passage (31) in the axial direction of the rotation shaft (10e, 10f).

7. The turbomachine (1a) according to Claim 1, further comprising:
a storage portion (40) that adjoins the bearing (20) on a side of the inlet (33) and stores the refrigerant as the lubricant, wherein
the inlet (33) located at the end of the rotation shaft (10a - 10f) is soaked in the refrigerant stored in the storage portion (40) as the lubricant.

8. A refrigeration cycle apparatus (100c, 100b) comprising:
a main circuit (5) that circulates a refrigerant whose saturated vapor pressure is lower than atmospheric pressure at ordinary temperature specified as 20° C ± 15° C, the main circuit (5) including
an evaporation mechanism (2) that stores a refrigerant liquid and evaporates the refrigerant liquid,
a turbomachine (1a) according to Claim 1, and
a condensation mechanism (4) that condenses refrigerant vapor and stores a refrigerant liquid, the evaporation mechanism (2), the turbomachine (1a), and the condensation mechanism (4) being connected in named order;
an evaporation-side circulation circuit (6) that includes a heat-absorption-side liquid carrying pump (61) and a heat-absorption heat exchanger (62), the heat-absorption-side liquid carrying pump (61) causing the refrigerant liquid stored in the evaporation mechanism (2) to be supplied to the heat-absorption heat exchanger (62), the refrigerant after heat absorption in the heat-absorption heat exchanger (62) being returned to the evaporation mechanism (2);
a condensation-side circulation circuit (7) that includes a heat-radiation-side liquid carrying pump (71) and a heat-radiation heat exchanger (72), the heat-radiation-side liquid carrying pump (71) causing the refrigerant liquid stored in the condensation mechanism (4) to be supplied to the heat-radiation heat exchanger (72), the refrigerant after heat radiation in the heat-radiation heat exchanger (72) being returned to the condensation mechanism (4); and
an upstream-side supply passage (91a, 91b) that diverges from the evaporation-side circulation circuit (6) at a position downstream of an exit of the heat-absorption-side liquid carrying pump (61) in the evaporation-side circulation circuit (6) or diverges from the condensation-side circulation circuit (7) at a position downstream of an exit of the heat-radiation-side liquid carrying pump (71) in the condensation-side circulation circuit (7), and supplies the refrigerant to the lubricant supply passage (30).

## Patentansprüche

1. Turbomaschine (1a) für eine Kältekreislaufvorrichtung, welche ein Kältemittel verwendet, dessen Sättigungsdampfdruck niedriger als der Atmosphärendruck bei gewöhnlicher, mit 20° C ± 15° C angegebener Temperatur ist, wobei die Turbomaschine (1a) umfasst:
eine Drehwelle (10a - 10f); und
ein Lager (20), das die Drehwelle (10a - 10f) trägt, **dadurch gekennzeichnet, dass**
die Drehwelle (10a - 10f) einen Schmiermittelzuführdurchgang (30) einschließt, welcher enthält
einen Hauptdurchgang (31), der sich von einem an einem Ende der Drehwelle (10a - 10f) gelegenen Einlass (33) in einer Achsrichtung der Drehwelle (10a - 10f) erstreckt, und
einen oder mehrere Nebendurchgänge (32), die von dem Hauptdurchgang (31) abweichend geführt sind und sich zu einem in einer Seitenfläche der Drehwelle (10a - 10f) gelegenen Auslass (35) hin erstrecken, und
während sich die Drehwelle (10a - 10f) dreht, der Schmiermittelzuführdurchgang (30) das Kältemittel nur zu einem Abschnitt zuführt, der zwischen der Drehwelle (10a - 10f) und dem Lager (20) gelegen ist.

2. Turbomaschine (1a) nach Anspruch 1, wobei
der Nebendurchgang (32) eine Mittelachse (P) des Hauptdurchgangs (30) schneidet und sich entlang einer geraden Linie senkrecht zu der Mittelachse (P) erstreckt.

3. Turbomaschine (1a) nach Anspruch 1, wobei
der Auslass (35) des Nebendurchgangs (32) sich in einer weiter rückwärtigen Position in Bezug auf die Drehrichtung der Drehwelle (10b, 10c) befindet als ein Punkt, an welchem eine gerade Linie (Q) die Seitenfläche der Drehwelle (10b, 10c) schneidet, wobei die gerade Linie (Q) eine Mittelachse (P) des Hauptdurchgangs (31) und einen Mittelpunkt einer Öffnung des Nebendurchgangs (32) an einer Seite des Hauptdurchgangs (31) miteinander verbindet.

4. Turbomaschine (1a) nach Anspruch 1, wobei
wenn der Nebendurchgang (32) in einer Achsrichtung der Drehwelle (10c) betrachtet wird, der Nebendurchgang (32) ausgehend von einer bestimmten Stelle in dem Nebendurchgang (32) in einer Drehrichtung der Drehwelle (10c) zu dem Auslass (35) hin nach rückwärts aufgeweitet ist, wobei sich diese Stelle zwischen einer Öffnung des Nebendurchgangs (32) an einer Seite des Hauptdurchgangs (31) und dem Auslass (35) befindet.

5. Turbomaschine (1a) nach Anspruch 1, wobei
der Schmiermittelzuführdurchgang (30) eine Mehrzahl von Nebendurchgängen (32) einschließt, die in der Achsrichtung der Drehwelle (10d) angeordnet sind.

6. Turbomaschine (1a) nach Anspruch 1, wobei
wenn der Nebendurchgang (32) aus einer Richtung senkrecht zu der Achsrichtung der Drehwelle (10e, 10f) betrachtet wird, eine Mittelachse (L) des Nebendurchgangs (32) in Bezug auf eine Mittelachse (P) des Hauptdurchgangs (31) in Achsrichtung der Drehwelle (10e, 10f) geneigt ist.

7. Turbomaschine (1a) nach Anspruch 1, weiterhin umfassend:
einen Speicherabschnitt (40), der an einer Seite des Einlasses (33) an das Lager (20) angrenzt und in dem das Kältemittel als ein Schmiermittel gespeichert ist, wobei
der an dem Ende der Drehwelle (10a - 10f) gelegene Einlass (33) in dem Kältemittel eingetaucht ist, das in dem Speicherabschnitt (40) als das Schmiermittel gespeichert ist.

8. Kältekreislaufvorrichtung (100c, 100b), umfassend:
einen Hauptkreislauf (5), welcher ein Kältemittel umwälzt, dessen Sättigungsdampfdruck niedriger als der Atmosphärendruck bei gewöhnlicher, mit 20° C ± 15° C angegebener Temperatur ist, wobei der Hauptkreislauf (5) einschließt:
einen Verdampfungsmechanismus (2), welcher eine Kältemittelflüssigkeit speichert und die Kältemittelflüssigkeit verdampft,
eine Turbomaschine (1a) nach Anspruch 1, und
einen Kondensationsmechanismus (4), welcher Kältemitteldampf kondensiert und eine Kältemittelflüssigkeit speichert, wobei der Verdampfungsmechanismus (2), die Turbomaschine (1a) und der Kondensationsmechanismus (4) in der genannten Reihenfolge verbunden sind;
einen verdampfungsseitigen Umwälzkreislauf (6), welcher eine wärmeabsorptionsseitige Flüssigkeitsförderpumpe (61) und einen Wärmeabsorptionswärmetauscher (62) einschließt, wobei die wärmeabsorptionsseitige Flüssigkeitsförderpumpe (61) bewirkt, dass die in dem Verdampfungsmechanismus (2) gespeicherte Kältemittelflüssigkeit dem Wärmeabsorptionswärmetauscher (62) zugeführt wird, wobei das Kühlmittel nach der in dem Wärmeabsorptionswärmetauscher (62) erfolgten Wärmeabsorption wieder zu dem Verdampfungsmechanismus (2) zurückgeführt wird;
einen kondensationsseitigen Umwälzkreislauf (7), welcher eine wärmeabstrahlungsseitige Flüssigkeitsförderpumpe (71) und einen Wärmeabstrahlungswärmetauscher (72) einschließt, wobei die wärmeabstrahlungsseitige Flüssigkeitsförderpumpe (71) bewirkt, dass die in dem Kondensationsmechanismus (4) gespeicherte Kältemittelflüssigkeit dem Wärmeabstrahlungswärmetauscher (72) zugeführt wird, wobei das Kühlmittel nach der in dem Wärmeabstrahlungswärmetauscher (72) erfolgten Wärmeabstrahlung wieder zu dem Kondensationsmechanismus (4) zurückgeführt wird; und
einen stromaufwärtsseitigen Zuführdurchgang (91a, 91b), welcher in dem verdampfungsseitigen Umwälzkreislauf (6) an einer Stelle stromabwärts von einem Ausgang der wärmeabsorptionsseitigen Flüssigkeitsförderpumpe (61) von dem verdampfungsseitigen Umwälzkreislauf (6) abweichend geführt ist, oder welcher in dem kondensationsseitigen Umwälzkreislauf (7) an einer Stelle stromabwärts von einem Ausgang der wärmeabstrahlungsseitigen Flüssigkeitsförderpumpe (71) von dem kondensationsseitigen Umwälzkreislauf (7) abweichend geführt ist und das Kältemittel dem Schmiermittelzuführdurchgang (30) bereitstellt.

## Revendications

1. Turbomachine (1a) pour un dispositif à cycle de réfrigération qui utilise un agent réfrigérant dont la pression de vapeur saturante est inférieure à la pression atmosphérique pour une température ordinaire fixée à 20° C ± 15° C, la turbomachine (1a) comprenant:
un arbre rotatif (10a - 10f); et
un palier (20) qui supporte l'arbre rotatif (10a - 10f), **caractérisée en ce que**
l'arbre rotatif (10a - 10f) renferme un passage d'amenée de lubrifiant (30) qui contient
un passage principal (31) qui s'étend depuis une entrée (33) située à une extrémité de l'arbre rotatif (10a - 10f) dans un sens axial dudit arbre rotatif (10a - 10f), et
un ou plusieurs passages secondaires (32) qui s'écartent du passage principal (31) et s'étendent jusqu'à une sortie (35) située dans une face latérale de l'arbre rotatif (10a - 10f) et,
lorsque l'arbre rotatif (10a - 10f) est en rotation, le passage d'amenée de lubrifiant (30) n'amène l'agent réfrigérant qu'à une partie située entre l'arbre rotatif (10a - 10f) et le palier (20).

2. Turbomachine (1a) selon la revendication 1, dans laquelle
le passage secondaire (32) coupe un axe central (P) du passage principal (30) et s'étend le long d'une ligne droite, perpendiculaire audit axe central (P).

3. Turbomachine (1a) selon la revendication 1, dans laquelle
la sortie (35) du passage secondaire (32) se situe dans une position qui, par rapport au sens de rotation de l'arbre rotatif (10b, 10c), est plus en arrière qu'un point donné où une ligne droite (Q) vient couper la face latérale de l'arbre rotatif (10b, 10c), la ligne droite (Q) reliant entre eux un axe central (P) du passage principal (31) et un centre d'une ouverture du passage secondaire (32) situé sur un côté dudit passage principal (31).

4. Turbomachine (1a) selon la revendication 1 dans laquelle,
lorsque le passage secondaire (32) est considéré dans un sens axial de l'arbre rotatif (10c), ledit passage secondaire (32) va en s'évasant vers l'arrière vers la sortie (35) dans un sens de rotation de l'arbre rotatif (10c), et ce depuis un point déterminé situé dans le passage secondaire (32), ledit point se situant entre une ouverture du passage secondaire (32) ménagée sur un côté du passage principal (31) et la sortie (35).

5. Turbomachine (1a) selon la revendication 1 dans laquelle,
le passage d'amenée de lubrifiant (30) renferme une pluralité de passages secondaires (32) qui sont disposés dans le sens axial de l'arbre rotatif (10d).

6. Turbomachine (1a) selon la revendication 1 dans laquelle,
lorsque le passage secondaire (32) est considéré à partir d'une direction perpendiculaire au sens axial de l'arbre rotatif (10e, 10f), un axe central (L) du passage secondaire (32) se trouve incliné en sens axial de l'arbre rotatif (10e, 10f) par rapport à un axe central (P) du passage principal (31).

7. Turbomachine (1a) selon la revendication 1, comprenant en outre:
une partie de stockage (40) qui est contiguë, sur un côté de l'entrée (33), au palier (20) et dans laquelle l'agent réfrigérant est stocké en tant qu'un agent lubrifiant,
l'entrée (33) située à l'extrémité de l'arbre rotatif (10a - 10f) se trouvant plongée dans l'agent réfrigérant qui est stocké dans la partie de stockage (40) en tant qu'agent lubrifiant.

8. Dispositif à cycle de réfrigération (100c, 100b) comprenant:
un cycle principal (5) qui fait circuler un agent réfrigérant dont la pression de vapeur saturante est inférieure à la pression atmosphérique pour une température ordinaire fixée à 20° C ± 15° C, le cycle principal (5) renfermant:
un mécanisme d'évaporation (2) qui stocke un liquide réfrigérant et fait s'évaporer ledit liquide réfrigérant,
une turbomachine (1a) selon la revendication 1, et
un mécanisme de condensation (4) qui condense la vapeur d'agent réfrigérant et stocke un liquide réfrigérant, le mécanisme d'évaporation (2), la turbomachine (1a) et le mécanisme de condensation (4) étant reliés dans l'ordre cité;
un cycle de circulation (6) situé côté évaporation qui renferme une pompe de refoulement de liquide (61) située côté absorption thermique et un échangeur de chaleur par absorption thermique (62), la pompe de refoulement de liquide (61) située côté absorption thermique faisant en sorte que le liquide réfrigérant stocké dans le mécanisme d'évaporation (2) est amené à l'échangeur de chaleur par absorption thermique (62), l'agent réfrigérant étant ramené au mécanisme d'évaporation (2) une fois que l'absorption thermique a eu lieu dans ledit échangeur de chaleur par absorption thermique (62);
un cycle de circulation (7) situé côté condensation qui renferme une pompe de refoulement de liquide (71) située côté rayonnement thermique et un échangeur de chaleur par rayonnement thermique (72), la pompe de refoulement de liquide (71) située côté rayonnement thermique faisant en sorte que le liquide réfrigérant stocké dans le mécanisme de condensation (4) est amené à l'échangeur de chaleur par rayonnement thermique (72), l'agent réfrigérant étant ramené au mécanisme de condensation (4) une fois que le rayonnement thermique a eu lieu dans ledit échangeur de chaleur par rayonnement thermique (72); et
un passage d'amenée (91a, 91b) prévu côté amont qui, dans le cycle de circulation (6) situé côté évaporation, s'écarte dudit cycle de circulation (6) situé côté évaporation, et ce à un point donné en aval d'une sortie de la pompe de refoulement de liquide (61) située côté absorption thermique, ou qui, dans le cycle de circulation (7) situé côté condensation, s'écarte dudit cycle de circulation (7) situé côté condensation, et ce à un point donné en aval d'une sortie de la pompe de refoulement de liquide (71) située côté rayonnement thermique, et qui délivre l'agent réfrigérant au passage d'amenée de lubrifiant (30).
